# EUROPEAN PATENT SPECIFICATION

(11) **EP 1 349 714 B1**
(45) Date of publication and mention of the grant of the patent: **18.01.2006**
(21) Application number: 01270409.4
(22) Date of filing: 05.12.2001
(51) Int. Cl.: B27B 9/00, B24B 27/08, B23D 47/00

(54) **PORTABLE CUTTING MACHINE WITH A WATER PUMP**
TRAGBARE SCHNEIDMASCHINE MIT EINER WASSERPUMPE
MACHINE A COUPER PORTABLE AVEC UNE POMPE A EAU

(30) Priority: 12.12.2000 SE 0004598
(43) Date of publication of application: 08.10.2003
(73) Proprietor: Aktiebolaget Electrolux (publ), 105 45 Stockholm (SE)
(72) Inventor: DONNERDAL, Ove, S-433 70 Sävedalen (SE)
(74) Representative: Johansson, Lars-Erik
(86) International application number: PCT/SE2001/002674
(87) International publication number: WO 2002/047873

(56) References cited:
- WO-A1-00/05032

## Description

The invention concerns a portable cutting machine, comprising a cutter unit with a rotatable cutter member in the form of a cutter disc or a saw disc, a cutter shaft for the rotation of the cutter member, a guard in the form of a protective housing for said cutter member, at least one water nozzle provided in the protective housing for the generation of one or more water jets in the space defined by the protective housing, said one or more water jets essentially laying the dust which is generated during the cutting operation and cooling the cutter member, the machine further comprising a power unit and a first power transmission between the power unit and the cutter shaft (see for example WO-A-0005032).

### BACKGROUND OF THE INVENTION

A wet cutter system is known, according to which the operator carries a unit comprising a small tank and an electrical water pump in a harness on his back. The unit also may stand on the ground. The system has the advantage that it can operate with a low consumption of water. However, it can not operate with petrol-powered cutting machines without access to electricity supply.

Combustion engine powered cutting machines has a great advantage over other types of cutting machines because they can operate without access to electricity supply.

### BRIEF DISCLOSURE OF THE INVENTION

In view of the above background, the invention aims at providing an integrated portable cutting machine which combines the advantage of the portable cutting machine which is defined in the above preamble with the advantage of powering the cutting machine by means of a combustion engine. This aim can be achieved by a portable cutting machine according to claim 1. The water supply can be satisfied by conveying water to the working site in a small can or other vessel in the case the cutting machine is equipped for the supply of only a minimum of water for laying dust and for cooling the cutter member. As an alternative, water can be supplied from a possibly available water mains or from a stream, lake, well or the like, in the case a water supply of that type is available near the working site. According to said latter alternatives, the water supply to the nozzle in the protective housing may be more plentiful.

Further features and aspects of the invention, as well as advantages thereof, will be apparent from the dependent claims and from the description of conceivable embodiments.

### BRIEF DECRIPTION OF DRAWINGS

In the following description of some conceivable embodiments of the machine according to the invention, reference will be made to the accompanying drawings, in which
- Fig. 1-4: are side views of the machine according to some embodiments thereof,
- Fig. 5: shows how the water supply can be satisfied when a non-self-priming type of pump is employed, and
- Fig. 6: shows a nozzle of a type which can be included in the machine.

### DESCRIPTION OF SOME CONCEIVABLE EMBODIMENTS

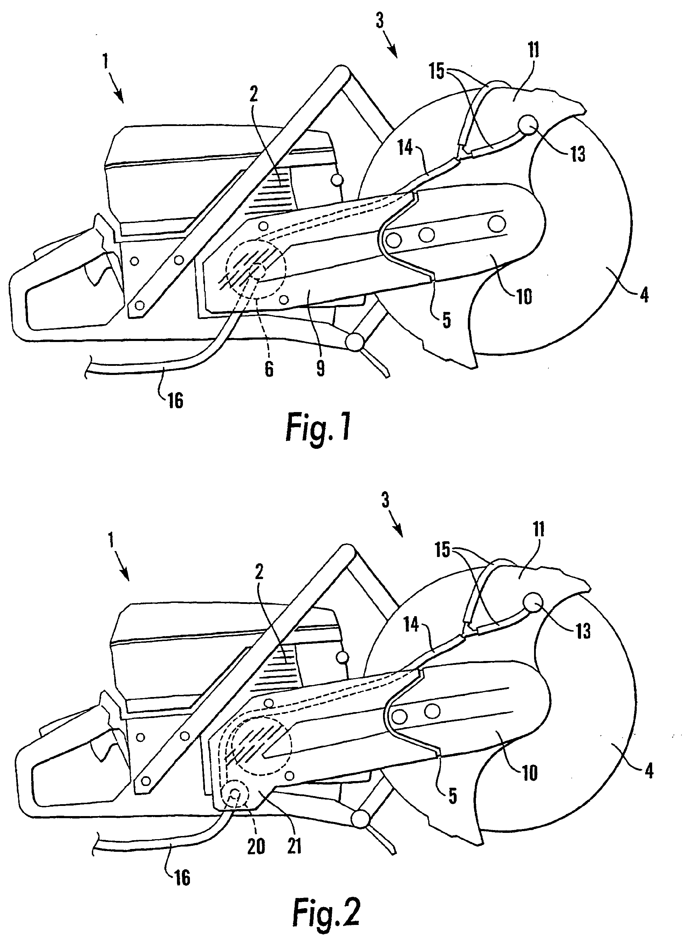

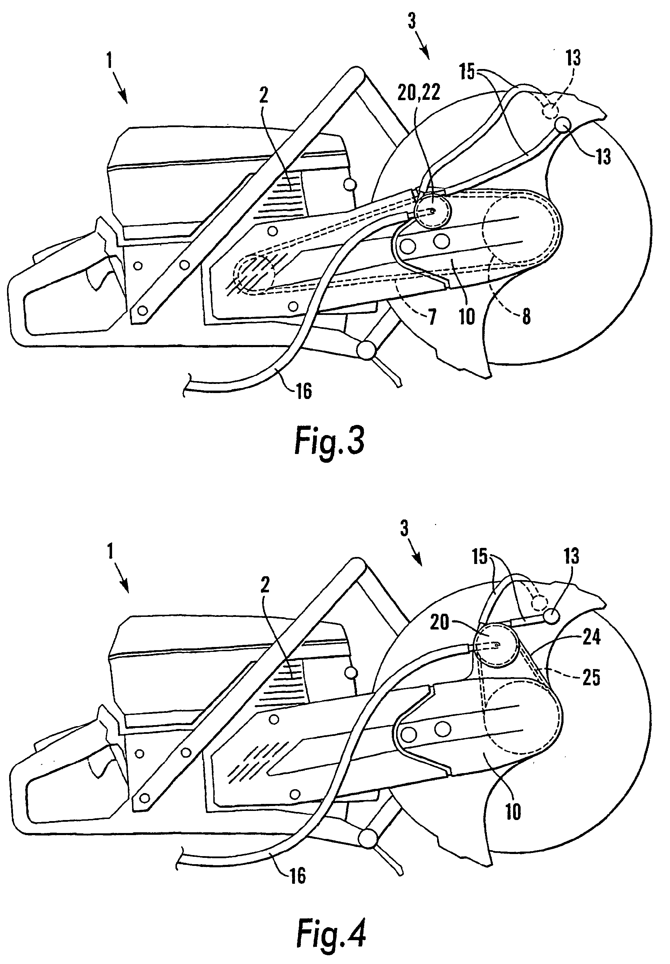

In Fig. 1-4 a cutting machine is generally designated by the reference numeral 1. The power unit of the machine comprises a preferably petrol-powered combustion engine 2. A cutter unit is designated 3. Said unit comprises a rotatable cutter member 4 in the form of a cutter disc or a saw disc, which is rotated by a not shown cutter shaft, which extends through the centre of the cutter member. The cutter member is secured to the cutter shaft between inner- and outer washers of the type referred to as flange washers, which are not shown in the drawings. The cutter shaft is mounted in a pair of ball bearings in bearing housings on a tool carrier 5, which extends forwards from a crankcase. The engine has a crank-shaft which drives a driving belt, which is designated 7 in Fig. 3, via a centrifugal clutch 6 and a rear driving wheel connected to a centrifugal clutch casing. The driving belt in turn drives a front belt pulley, which is designated 8 in Fig. 3, which belt pulley is non-rotatably connected to the cutter shaft and provided to rotate said cutter shaft and hence the cutter member 4. The driving belt 7 is covered by a clutch casing 9 and by a front belt protection 10.

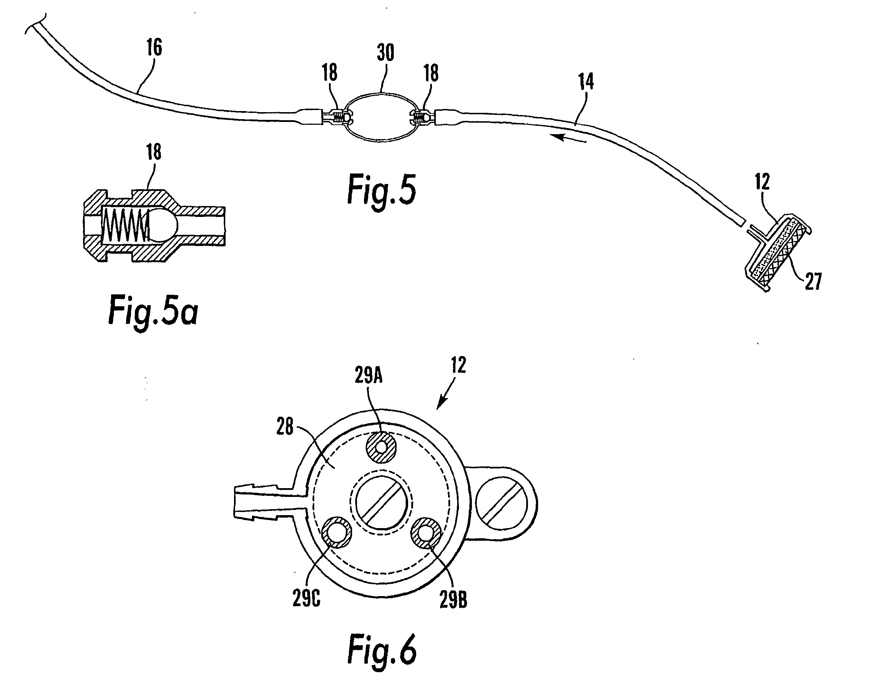

The rear part of the cutter member 4 is covered by a guard in the form of a protective housing 11. In the protective housing 11 there are provided a nozzle 12 on each side of the cutter member 4. The nozzles 12 may be designed e.g. as will described with reference to Fig. 6. Connections to the nozzles 12, on the outside of the housing 11, are designated 13. From a pump, which can be mounted at different locations in the machine according to the different embodiments which will be described in the following, a main connection conduit 14 extends. Branch conduits are designated 15 and a water supply conduit (suction conduit) to the pump is designated 16.

According to the embodiment which is shown in Fig. 1, the pump is mounted on and is provided to be powered by the not shown crank-shaft of the engine 2. The pump in this case is hidden behind the centrifugal clutch 6.

In the embodiment according to Fig. 2, the pump, which is designated 20 in all the embodiments, is located inside of the clutch casing 9, more particularly inside of a projection 21 of the clutch casing which projects downwards. The pump 20 in this case is driven by the crank-shaft, e.g. via a worm gear or via a gear wheel inside the centrifugal clutch; alternatively via a very small belt transmission between the crank shaft and a driving shaft of the pump.

According to the embodiment shown in Fig. 3, the pump 20 instead is located in the front belt protection 10 and is powered by the driving belt 7 via a third belt pulley 22 between the rear driving wheel and the front belt pulley 8. The third belt pulley 22 is driven by the driving belt 20 and is in this case integrated with a belt stretcher provided for the driving belt 7.

In the embodiment according to Fig. 4, the pump 20 is located in an upwards-rearwards directed projection 24 of the front driving belt casing 10. In this case, the front belt pulley 8 is designed as a double belt pulley. Alternatively, two separate belt pulleys are provided on the cutter shaft. This second belt pulley, or the second groove of the double belt pulley, respectively, in this case drives the pump 20 via an auxiliary driving belt 25.

It is also conceivable, according to an embodiment which is not illustrated in any drawing, that the pump is provided in the front belt protection 10 and is driven via a gear wheel or worm gear located between the said ball bearings on the cutter shaft. This provides a more compact solution than the embodiment which is shown in Fig. 4, where the pump is driven via an auxiliary driving belt 25. According to still another alternative the pump is provided in the protective housing 11 inside the said inner flange washer.

According to still another alternative the pump is integrated in the front belt protection 10 via a driving member engaged to the front belt pulley 8 or to a central nut by means of which the belt pulley is secured to the cutter shaft such that the rotational centre of a impeller in the pump is coaxial with the rotational centre of drive shaft.

When a not self priming (self-sucking) pump 20 is employed, the suction conduit 16, i. e. the water supply conduit, may be provided with a manually powered booster pump 30, Fig. 5, in the form of a rubber bellows, for initiating the pumping. The branched conduits 15 have not been shown in this embodiment and a nozzle 12 is shown only schematically. A pair of non return valves in the connections to the rubber bellows 30 are designated 18 and are also shown at a larger scale in the same drawing.

Filter materials 27 are included in the nozzles 12. In order to make it possible to employ nozzles 12 of a standard type suitable for cutting machines of various capacity, which may require different quantities of water for laying the produced dust and/or for cooling larger or smaller cutter members, the nozzles may be provided with a turnable plate 28, Fig. 6, having a plurality of openings 29A, 29B, 29C with different dimensions. By turning the plate 28, the openings 29A-29C can be registered such that they will communicate with members in the nozzle 12 for the supply of water.

The pump 20 preferably is a low pressure type suction pump, developing a pressure of 2-4 bar of the discharged water.

## Claims

1. Portable cutting machine (1), comprising a cutter unit (3) with a rotatable cutter member (4) in the form of a cutter disc or a saw disc, a cutter shaft for the rotation of the cutter member, a guard in the form of a protective housing (11) for said cutter member, at least one water nozzle (12) provided in the protective housing for the generation of one or more water jets in the space defined by the protective housing, said one or more water jets essentially laying the dust which is generated during the cutting operation and cooling the cutter member, the machine further comprising a power unit (2) and a first power transmission (7) between the power unit and the cutter shaft,
**characterized in that** a water pump (20) is provided in or on the cutter unit (3) or inside a casing (9), which covers at least parts of said power transmission, and that the pump is powered directly by members belonging to said first power transmission or by the cutter shaft or indirectly by said members belonging to said first power transmission or by the cutter shaft.

2. Cutting machine according to claim 1, **characterized in that** said power transmission comprises a first driving belt (7) and a first belt pulley (8) or a first groove on a double belt pulley on the cutter shaft, and that the pump is driven via a second belt pulley or a second groove on said double belt pulley via a second driving belt (25).

3. Cutting machine according to claim 2, **characterized in that** the pump is mounted in a front belt protection included in the cutter unit.

4. Cutting machine according to claim 1, **characterized in that** the cutter shaft is joumalled in at least two ball bearings in a carrier for the cutter member and that the pump (20) is driven via a gear wheel or a worm gear, which is mounted between ball bearings on the cutter shaft.

5. Cutting machine according to claim 1, wherein the cutter member is mounted between an inner- and an outer flange washer, **characterized in that** the pump is mounted inside the inner flange washer and is driven by the cutter shaft.

6. Cutting machine according to claim 1, **characterized in that** the pump is provided in a front belt protection and is driven via a driving member connected to a belt pulley for driving the cutter member or to a nut which secures the belt pulley on the cutter shaft.

7. Cutting machine according to claim 1, wherein the cutter shaft is driven by the power unit via a driving belt (7) between a rear driving wheel and a front belt pulley (8),
**characterized in that** the pump is driven via a belt pulley mounted between the rear driving wheel and the front belt pulley (8).

8. Cutting machine according to claim 7, **characterized in that** the pump is integrated with said belt pulley which is provided between the rear driving wheel and the front belt pulley.

9. Cutting machine according to claim 1, wherein the power unit comprises a crank-shaft, which drives a driving belt (7) included in said first powered transmission via a centrifugal clutch which is covered by a clutch casing (9), **characterized in that** the pump (20) is provided inside the clutch casing.

10. Cutting machine according to claim 9, **characterized in that** the pump is driven from the crank-shaft via a worm gear or via a belt transmission.

## Patentansprüche

1. Tragbare Schneidmaschine (1), umfassend eine Schneideinheit (3) mit einem drehbaren Schneidglied (4) in Form einer Schneidscheibe oder einem Sägeblatt, einer Schneidwelle zum Drehen des Schneidgliedes, einem Schutz in Form eines schützenden Gehäuses (11) für das Schneidglied, mindestens eine Wasserdüse (12), die im schützenden Gehäuse zur Erzeugung eines oder mehrerer Wasserstrahlen in dem durch das schützende Gehäuse gebildeten Raum vorgesehen wird, wobei eine oder mehrere Wasserstrahlen im wesentlichen den Staub abbinden, der während des Schneidbetriebes erzeugt wird, und das Schneidglied kühlen, wobei die Maschine ferner eine Antriebseinheit (2) und eine erste Kraftübertragung (7) zwischen der Antriebseinheit und der Schneidwelle umfasst, **dadurch gekennzeichnet, dass** eine Wasserpumpe (20) in oder an der Schneideinheit (3) oder im Inneren einer Verkleidung (9) vorgesehen ist, die zumindest Teile der Kraftübertragung abdeckt, und dass die Pumpe direkt durch Glieder, die zur ersten Kraftübertragung gehören oder durch die Schneidwelle oder indirekt durch die Glieder, die zur ersten Kraftübertragung gehören, oder durch die Schneidwelle angetrieben wird.

2. Schneidmaschine nach Anspruch 1, **dadurch gekennzeichnet, dass** die Kraftübertragung einen ersten Antriebsriemen (7) und eine erste Riemenscheibe (8) oder eine erste Nut auf einer Doppelriemenscheibe an der Schneidwelle umfasst, und dass die Pumpe über eine zweite Riemenscheibe oder eine zweite Nut auf der Doppelriemenscheibe über einen zweiten Antriebsriemen (25) angetrieben wird.

3. Schneidmaschine nach Anspruch 2, **dadurch gekennzeichnet, dass** die Pumpe in einem vorderen Scheibenschutz, einschließlich in der Schneideinheit, gelagert ist.

4. Schneidmaschine nach Anspruch 1, **dadurch gekennzeichnet, dass** die Schneidwelle in mindestens zwei Kugellagern in einem Träger für das Schneidglied gelagert ist, und dass die Pumpe (20) über ein Zahnrad oder einen Schneckenantrieb angetrieben wird, der zwischen den Kugellagern auf der Schneidwelle gelagert ist.

5. Schneidmaschine nach Anspruch 1, bei der das Schneidglied zwischen einer inneren und äußeren Flanschscheibe gelagert ist, **dadurch gekennzeichnet, dass** die Pumpe innerhalb der inneren Flanschscheibe gelagert und durch die Schneidwelle angetrieben wird.

6. Schneidmaschine nach Anspruch 1, **dadurch gekennzeichnet, dass** die Pumpe in einem vorderen Riemenschutz vorgesehen und über ein Antriebsglied angetrieben wird, das mit einer Riemenscheibe zum Antrieb des Schneidgliedes oder mit einer Mutter verbunden ist, die die Riemenscheibe auf der Schneidwelle sichert.

7. Schneidmaschine nach Anspruch 1, bei der die Schneidwelle durch die Antriebseinheit über einen Antriebsriemen (7) zwischen einem hinteren Antriebsrad und einer vorderen Riemenscheibe (8) angetrieben wird, **dadurch gekennzeichnet, dass** die Pumpe über eine Riemenscheibe angetrieben wird, die zwischen dem hinteren Antriebsrad und der vorderen Riemenscheibe (8) befestigt ist.

8. Schneidmaschine nach Anspruch 7, **dadurch gekennzeichnet, dass** die Pumpe in der Riemenscheibe integriert ist, die zwischen dem hinteren Antriebsrad und der vorderen Riemenscheibe vorgesehen wird.

9. Schneidmaschine nach Anspruch 1, bei der die Antriebseinheit eine Kurbelwelle umfasst, die einen Antriebsriemen (7) antreibt, der in der ersten Kraftübertragung über eine Zentrifugalkupplung eingeschlossen ist, die durch eine Kupplungsverkleidung (9) abgedeckt ist, **dadurch gekennzeichnet, dass** die Pumpe (20) im Inneren der Kupplungsverkleidung vorgesehen ist.

10. Schneidmaschine nach Anspruch 9, **dadurch gekennzeichnet, dass** die Pumpe von einer Kurbelwelle über einen Schneckenantrieb oder über eine Riemenübertragung angetrieben wird.

## Revendications

1. Machine à couper portable (1), comprenant une unité de coupe (3), comportant un élément de coupe rotatif (4) sous la forme d'un disque de coupe ou d'un disque scie, un arbre de coupe pour la mise en rotation de l'élément de coupe, une sécurité sous la forme d'un carter de protection (11) pour ledit élément de coupe, au moins une buse à eau (12) disposée dans le carter de protection destinée à la génération d'un ou plusieurs jets d'eau dans l'espace défini par le carter de protection, lesdits un ou plusieurs jets d'eau déposant pour l'essentiel la poussière qui est générée au cours de l'opération de coupe et refroidissant l'élément de coupe, la machine comprenant en outre un bloc-moteur (2) et une première transmission de puissance (7) entre le bloc moteur et l'arbre de coupe, **caractérisée en ce qu'**une pompe à eau (20) est prévue dans l'unité de coupe (3) ou sur celle-ci, ou bien à l'intérieur d'un boîtier (9), qui recouvre au moins des parties de ladite transmission de puissance, et **en ce que** la pompe est mue directement par des éléments appartenant à ladite première transmission de puissance ou par l'arbre de coupe ou bien indirectement par lesdits éléments appartenant à ladite première transmission de puissance ou bien par l'arbre de coupe.

2. Machine à couper selon la revendication 1, **caractérisée en ce que** ladite transmission de puissance comprend une première courroie d'entraînement (7) et une première poulie à courroie (8) ou bien une première gorge sur une poulie à courroie double sur l'arbre de coupe, et **en ce que** la pompe est entraînée par l'intermédiaire d'une seconde poulie à courroie ou bien d'une seconde gorge sur ladite poulie à courroie double par l'intermédiaire d'une seconde courroie d'entraînement (25).

3. Machine à couper selon la revendication 2, **caractérisée en ce que** la pompe est montée sur une protection de courroie avant comprise dans l'unité de coupe.

4. Machine à couper selon la revendication 1, **caractérisée en ce que** l'arbre de coupe est tourillonné dans au moins deux roulements à billes dans un support de l'élément de coupe, et **en ce que** la pompe (20) est entraînée par l'intermédiaire d'une roue d'engrenage ou d'une vis sans fin, qui est montée entre les roulements à billes sur l'arbre de coupe.

5. Machine à couper selon la revendication 1, dans laquelle l'élément de coupe est monté entre une rondelle de bride intérieure et une rondelle de bride extérieure, **caractérisée en ce que** la pompe est montée à l'intérieur de la rondelle de bride intérieure et est entraînée par l'arbre de coupe.

6. Machine à couper selon la revendication 1, **caractérisée en ce que** la pompe est disposée dans une protection de courroie avant et est entraînée par l'intermédiaire d'un élément d'entraînement relié à une poulie à courroie afin d'entraîner l'élément de coupe ou un écrou qui fixe la poulie à courroie sur l'arbre de coupe.

7. Machine à couper selon la revendication 1, dans laquelle l'arbre de coupe est entraîné par le bloc-moteur via une courroie d'entraînement (7) entre une roue d'entraînement arrière et une poulie à courroie avant (8), **caractérisée en ce que** la pompe est entraînée par l'intermédiaire d'une poulie à courroie montée entre la roue d'entraînement arrière et la poulie à courroie avant (8).

8. Machine à couper selon la revendication 7, **caractérisée en ce que** la pompe est intégrée à ladite poulie à courroie qui est disposée entre la roue d'entraînement arrière et la poulie à courroie avant.

9. Machine à couper selon la revendication 1, dans laquelle le bloc-moteur comprend un vilebrequin, qui entraîne une courroie d'entraînement (7) comprise dans ladite première transmission à laquelle est transmise de la puissance par l'intermédiaire d'un embrayage centrifuge qui est protégé par un boîtier d'embrayage (9), **caractérisée en ce que** la pompe (10) est disposée à l'intérieur du boîtier d'embrayage.

10. Machine à couper selon la revendication 9, **caractérisée en ce que** la pompe est entraînée à partir du vilebrequin par l'intermédiaire d'une vis sans fin ou par l'intermédiaire d'une transmission à courroie.
